# EUROPEAN PATENT APPLICATION

(11) **EP 3 511 721 A1**
(43) Date of publication of application: **17.07.2019**
(21) Application number: 19150553.6
(22) Date of filing: 07.01.2019
(51) Int. Cl.: G01P 5/26, G01L 11/02, G01P 13/02, G01P 21/02, G01S 17/58

(54) **AIRCRAFT AIR DATA GENERATION USING LASER SENSOR DATA AND INERTIAL SENSOR DATA**

(30) Priority: 12.01.2018 US 201815870026
(71) Applicant: ROSEMOUNT AEROSPACE INC., Burnsville, MN 55306-4898 (US)
(72) Inventor: WINTER, John D., Shoreview, MN 55126 (US)
(74) Representative: Dehns

(57) **Abstract**

A set of aircraft air data parameter outputs is generated based on laser sensor data and inertial sensor data. Directional light is emitted in one or more directions into air about an exterior of an aircraft, and returns of the emitted directional light in the one or more directions is sensed. Laser sensor data representing velocity of the aircraft in the one or more directions, static pressure of the air, and static air temperature of the air is generated based on the sensed returns. Acceleration and rotational rate of the aircraft is sensed in three axes. The set of aircraft air data parameter outputs is generated based on the laser sensor data and the inertial sensor data. The set of aircraft air data parameter outputs includes aircraft static air pressure, aircraft static air temperature, aircraft true airspeed, aircraft angle of attack, and aircraft angle of sideslip.

## Description

### BACKGROUND

Modern aircraft often incorporate air data systems that calculate air data outputs based on measured parameters collected from various sensors positioned about the aircraft. For instance, many air data systems utilize air data probes (e.g., pitot-static probes) that measure pneumatic pressure of airflow about the aircraft exterior to generate aircraft air data outputs, such as aircraft pressure altitude (determined from static pressure measurements), true airspeed, calibrated airspeed, Mach number, angle of attack, angle of sideslip, or other air data parameters.

As aircraft systems such as flight control systems and stall protection systems become more highly integrated, complex, and automated, the accuracy and integrity of air data information used by these aircraft systems becomes increasingly important. As such, these highly complex systems typically utilize inputs of air data information that are measured by independent sources to help alleviate concerns of common mode failure conditions of the sensors that supply the air data information.

To this end, certain air data systems utilize laser air data sensors that emit directional light into the freestream airflow using one or more lasers and analyze the backscattered returns (e.g., molecular and/or aerosol reflections) of the laser to derive air data parameters. Such laser air data sensors, however, typically require three separate directions of emitted laser light to derive the full spectrum of air data outputs. Moreover, while laser air data sensors have certain failure modes that are unique with respect to traditional pneumatic air data systems, laser air data sensors and traditional pneumatic air data systems (e.g., pitot-static probes) may still be susceptible to certain common failure modes, such as icing, foreign object damage (e.g., to the optical port at the exterior of the aircraft), or other common failure modes.

### SUMMARY

In one example, a system includes a laser air data sensor, an inertial sensor assembly, and processing circuitry. The laser air data sensor is configured to emit directional light in one or more directions into air about an exterior of an aircraft, and generate, based on returns of the emitted directional light, laser sensor data representing velocity of the aircraft in the one or more directions, static pressure of the air, and static air temperature of the air. The inertial sensor assembly is configured to sense acceleration and rotational rate of the aircraft and generate inertial sensor data representing acceleration and rotational rate in three axes. The processing circuitry generates a set of aircraft air data parameter outputs based on the laser sensor data and the inertial sensor data. The set of aircraft air data parameter outputs includes aircraft static air pressure, aircraft static air temperature, aircraft true airspeed, aircraft angle of attack, and aircraft angle of sideslip.

In another example, a method includes emitting directional light in one or more directions into air about an exterior of an aircraft, sensing returns of the emitted directional light in the one or more directions, and generating, based on the sensed returns, laser sensor data representing velocity of the aircraft in the one or more directions, static pressure of the air, and static air temperature of the air. The method further includes sensing inertial sensor data that includes acceleration and rotational rate of the aircraft in three axes, and generating a set of aircraft air data parameter outputs based on the laser sensor data and the inertial sensor data. The set of aircraft air data parameter outputs includes aircraft static air pressure, aircraft static air temperature, aircraft true airspeed, aircraft angle of attack, and aircraft angle of sideslip.

### BRIEF DESCRIPTION OF THE DRAWINGS

FIG. 1A is a schematic block diagram illustrating an example aircraft air data system including a laser air data sensor that emits directional light in three separate directions and an inertial sensor assembly that senses acceleration and rotational rate of the aircraft.
FIG. 1B is a schematic block diagram illustrating further details of processing circuitry of the aircraft air data system to generate air data parameters based on inertial sensor data and laser sensor data corresponding to three directions of emitted directional light.
FIG. 2A is a schematic block diagram illustrating an example of the aircraft air data system showing the laser air data sensor emitting directional light in two separate directions.
FIG. 2B is a schematic block diagram illustrating further details of processing circuitry of the aircraft air data system to generate air data parameters based on inertial sensor data and laser sensor data corresponding to two directions of emitted directional light.
FIG. 3A is a schematic block diagram illustrating an example of the aircraft air data system showing the laser air data sensor emitting directional light in a single direction.
FIG. 3B is a schematic block diagram illustrating further details of processing circuitry of the aircraft air data system to generate air data parameters based on inertial sensor data and laser sensor data corresponding to a single direction of emitted directional light.

### DETAILED DESCRIPTION

According to techniques of this disclosure, an aircraft air data system utilizes a combination of laser sensor data and inertial sensor data to produce a set of aircraft air data parameter outputs that is usable by consuming systems for, e.g., controlled flight of the aircraft. Laser air data sensors described herein analyze molecular backscatter returns (e.g., Rayleigh scattering) of emitted directional light to derive static pressure, static air temperature, and velocity information in each direction of the emitted light. Inertial sensor assemblies including accelerometers and rate gyroscopes sense acceleration and rotational rate (e.g., along three independent axes) of the aircraft from which aircraft velocity, position, and attitude information is derived.

The laser sensor data, including data representative of static pressure and static air temperature, enables the determination of pressure and temperature-based air data parameters, such as pressure altitude, Mach number, and calibrated airspeed (CAS). In some examples, such as when the laser sensor data includes velocity information for three separate directions, air data parameter outputs including static air pressure (Ps), static air temperature (SAT), aircraft angle of attack (AOA), aircraft angle of sideslip (AOS), and aircraft true airspeed (TAS) can be determined based on the laser air data and augmented (e.g., adjusted) via filtering techniques using the inertial sensor data to improve accuracy and response time of the air data parameter outputs. In other examples, pressure-based air data parameters (e.g., static air pressure, static air temperature, and/or parameters derived therefrom) can be determined based on the laser sensor data and air data parameters, such as AOA, AOS, and TAS can be determined based on the inertial sensor data.

The techniques of this disclosure therefore enable the generation of air data parameter outputs, including pressure-based and other air data parameters that are derived using dissimilar technologies, and which can provide such air data parameters to consuming systems (e.g., aircraft flight control systems, display systems, or other consuming systems) using combinations of the inertial sensor data and any one or more laser air data sensors. Accordingly, air data systems implementing techniques described herein can improve both accuracy and reliability of air data parameter outputs that are used for operational control (e.g., controlled flight) of the aircraft.

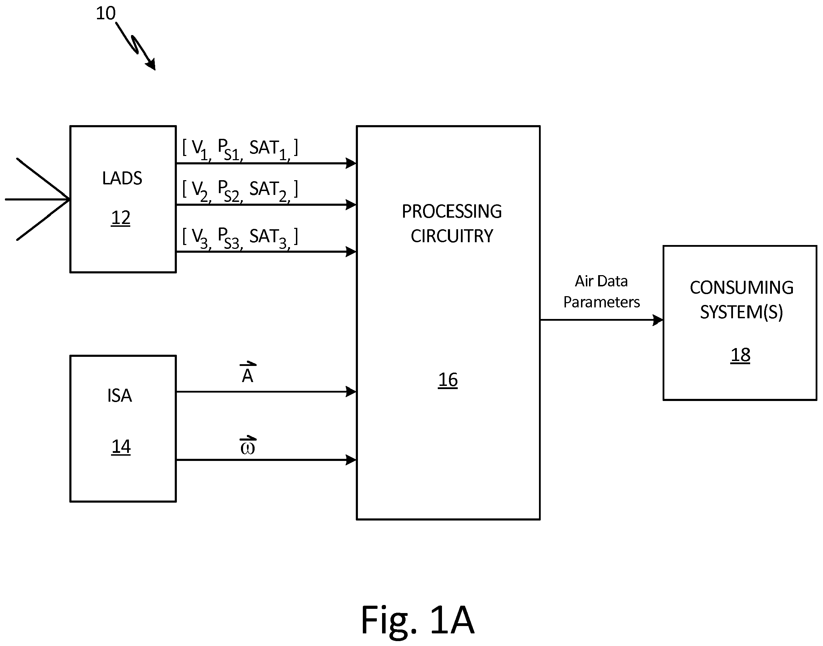

FIG. 1A is a schematic block diagram of aircraft air data system 10 including laser air data sensor (LADS) 12 that emits directional light in three separate directions and inertial sensor assembly (ISA) 14 that senses acceleration and rotational rate of the aircraft. As illustrated in FIG. 1A, aircraft air data system 10 further includes processing circuitry 16 that generates and outputs a set of aircraft air data parameters to consuming systems 18.

Air data system 10, including LADS 12, ISA 14, and processing circuitry 16 is an air data system disposed on an aircraft and configured to provide air data parameter outputs to consuming systems 18 for operational control (e.g., controlled flight) of the aircraft. Examples of air data parameter outputs generated by processing circuitry 16 of air data system 10 include static air pressure, static air temperature (SAT), aircraft true airspeed (TAS), aircraft angle of attack (AOA), aircraft angle of sideslip (AOS), and/or air data parameters derived therefrom (e.g., aircraft pressure altitude, aircraft Mach number, aircraft calibrated airspeed (CAS), or other air data parameters). Consuming systems 18 can include aircraft flight control systems, flight management computers, cockpit displays, or other systems that utilize air data parameter outputs from air data system 10 for display and/or operational control of the aircraft.

LADS 12 is a light detection and ranging (LIDAR) sensor (or sensors) configured to emit directional light (e.g., laser light) into the airflow about the exterior of the aircraft and analyze the backscattered returns (e.g., molecular and/or aerosol reflections) to provide laser sensor data to processing circuitry 16. In the example of FIG. 1A, LADS 12 emits the directional light in three separate directions and analyzes the backscattered returns of the emitted light in each of the three separate directions to determine velocity information of the airflow (via the backscattered Doppler shift) as well as static pressure and SAT of the airflow (via a spectral line shape of the molecular scattered returns). Though the example of FIG. 1A illustrates LADS 12 emitting directional light in three separate directions, in other examples, LADS 12 can emit the directional light in more than three separate directions or less than three separate directions. LADS 12, in some examples, includes multiple (e.g., three) laser emitters and multiple (e.g., three) corresponding receivers configured to receive the backscattered returns of the emitted laser light. In other examples, LADS 12 can include a single laser emitter, optical components configured to direct the emitted laser light into the three separate directions, and multiple (e.g., three) corresponding receivers configured to receive the backscattered returns.

ISA 14 includes a plurality of accelerometers and rate gyroscopes that sense acceleration and rotational rate along three independent axes. For instance, ISA 14 can include three accelerometers that form a 3-axis triad, each of the accelerometers mounted (e.g., on a circuit board) and aligned to sense acceleration forces along one of three mutually-orthogonal axes. Rate gyroscopes of ISA 14 can be similarly mounted (e.g., on the same circuit board) and aligned to sense a rotational rate along one of three mutually-orthogonal axes (e.g., roll rate, pitch rate, and yaw rate).

Processing circuitry 16 can include, e.g., one or more processors and computer-readable memory encoded with instructions that, when executed by the one or more processors, cause processing circuitry 16 to operate in accordance with techniques described herein. Examples of the one or more processors include any one or more of a microprocessor, a controller, a digital signal processor (DSP), an application specific integrated circuit (ASIC), a field-programmable gate array (FPGA), or other equivalent discrete or integrated logic circuitry. Computer-readable memory of processing circuitry 16 can be configured to store information within processing circuitry 16 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of processing circuitry 16 can include volatile and non-volatile memories. Examples of volatile memories can include random access memories (RAM), dynamic random access memories (DRAM), static random access memories (SRAM), and other forms of volatile memories Examples of non-volatile memories can include magnetic hard discs, optical discs, floppy discs, flash memories, or forms of electrically programmable memories (EPROM) or electrically erasable and programmable (EEPROM) memories.

Processing circuitry 16, as illustrated in FIG. 1A, is electrically and/or communicatively coupled to receive laser sensor data from LADS 12 representative of velocity, static air pressure, and static air temperature. In the example of FIG. 1A, processing circuitry 16 receives laser sensor data from LADS 12 corresponding to each of the three separate directions (e.g., beams) of emitted directional light. Laser sensor data corresponding to each of the three separate directions of the emitted directional light includes velocity information of the airflow (illustrated as V1, V2, and V3), static pressure of the airflow (illustrated as PS1, PS2, and PS3), and static air temperature of the airflow (illustrated as SAT1, SAT2, and SAT3).

ISA 14 is electrically and/or communicatively connected with processing circuitry 16 to provide inertial sensor data representing acceleration (illustrated as A̅) and rotational rate (illustrated as ω̅) of the aircraft along each of the three axes. That is, acceleration data A̅ is a three-dimensional vector, each element of the vector corresponding to acceleration data in one of the three mutually-orthogonal axes. Similarly, ω̅ is a three-dimensional vector, each element of the vector corresponding to rotational rate data along one of three mutually-orthogonal axes (e.g., roll rate, pitch rate, and yaw rate).

LADS 12, ISA 14, and processing circuitry 16 can be enclosed within a single electronics housing that forms a single line replaceable unit (LRU) or distributed among multiple LRUs that are electrically and/or communicatively connected. Processing circuitry 16 can be incorporated in LADS 12, ISA 14, a physically remote LRU that is electrically and/or communicatively coupled with LADS 12 and ISA 14, or distributed among any one or more of LADS 12, ISA 14, and the physically remote LRU.

In operation, LADS 12 emits directional light (e.g., laser light) in the three separate directions and analyzes backscattered returns (e.g., molecular backscattering) to provide the laser sensor data to processing circuitry 16. ISA 14 senses acceleration and rotational rate of the aircraft and transmits the inertial sensor data to processing circuitry 16. Processing circuitry 16 generates, based on the laser sensor data and the inertial sensor data, a set of aircraft air data parameter outputs that are transmitted to consuming systems via, e.g., an aircraft communications data bus (e.g., an ARINC 429 data bus or other aircraft communications data bus). The set of aircraft air data parameter outputs includes a full complement of air data parameters that are usable by the consuming systems for operational control of the aircraft, such as controlled flight of the aircraft. Such a full complement of air data parameters includes aircraft static air pressure, aircraft SAT, aircraft TAS, aircraft AOA, aircraft AOS, and optionally parameters derived therefrom.

In the example of FIG. 1A, processing circuitry 16 determines the set of air data parameter outputs using the laser sensor data and adjusts (e.g., augments) the air data parameter outputs using the inertial sensor data via complementary filtering or other data blending techniques. For instance, as is further described below, processing circuitry 16 can generate aircraft pressure-based air data parameter outputs, such as static pressure, SAT, Mach, CAS, pressure altitude, or other pressure-based air data parameters based on the received laser sensor data corresponding to static air pressure (e.g., any one or more of PS1, PS2, and PS3) and SAT (e.g., any one or more of SAT1, SAT2, and SAT3). Processing circuitry 16 can generate aircraft air data parameter outputs, such as aircraft AOA, aircraft AOS, and aircraft TAS based on the laser sensor data corresponding to velocities (e.g., V1, V2, and V3) defining a three-dimensional velocity vector of the aircraft.

Processing circuitry 16 blends the air data parameters determined based upon the laser sensor data with the inertial sensor data (i.e., A̅, and ω̅) via complementary filtering or other blending techniques to produce the set of aircraft air data parameters that are output to consuming systems 18. Because inertial sensor data corresponding to acceleration and rotational rate of the aircraft is typically generated at an update rate (or sampling rate) that is two, three, four, or more times the update rate at which the laser sensor data is generated, blending of the inertial sensor data with the laser sensor data can improve accuracy and response time of the aircraft air data parameters output to consuming systems 18 (e.g., during dynamic maneuvers of the aircraft). Moreover, because sensors of ISA 14 (i.e., accelerometers and rate gyroscopes) have different failure modes than sensors of LADS 12 (i.e., laser emitters and receivers), incorporation of inertial data from ISA 14 in the air data parameter calculations can increase reliability and integrity of the air data parameter outputs. For instance, because sensors of ISA 14 can provide inertial sensor data that is usable to determine the air data parameter outputs, such inertial sensor data can be used to generate the set of aircraft air data parameter outputs during times when sensors of LADS 12 may be affected by solar saturation (i.e., saturation of the optical receivers from solar light). Accordingly, air data system 10 incorporating techniques of this disclosure can increase accuracy and reliability of the air data parameter outputs.

While the example of FIG. 1A has been illustrated and described with respect to a single LADS 12 and a single ISA 14, it should be understood that in other examples, air data system 10 can include more than one LADS 12 and/or ISA 14. For instance, in certain examples, air data system 10 can include two or more of LADS 12 and/or two or more of ISA 14 that are communicatively interconnected with each other and/or with processing circuitry 16. In such examples, processing circuitry 16 can compare sensor data and/or air data parameter outputs from any one or more of the multiple LADS 12 and multiple ISA 14 for data integrity monitoring, fault detection, fault identification, and/or source selection operations, thereby further increasing accuracy and reliability of the air data parameter outputs.

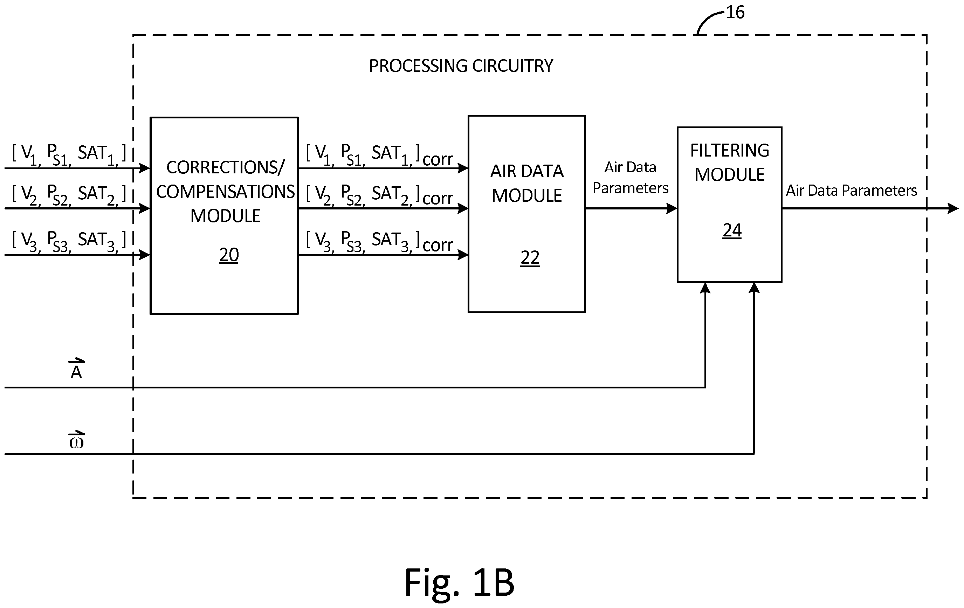

FIG. 1B is a schematic block diagram illustrating further details of processing circuitry 16 of aircraft air data system 10 to generate air data parameter outputs based on inertial sensor data and laser sensor data corresponding to three directions of emitted directional light. As illustrated in FIG. 1B, processing circuitry 16 includes corrections and compensations module 20, air data module 22, and filtering module 24. Corrections and compensations module 20, air data module 22, and filtering module 24 can be implemented in software, hardware, or combinations of software and hardware.

Processing circuitry 16 receives laser sensor data corresponding to the three directions of emitted directional light from LADS 12 (FIG. 1A) and inertial sensor data corresponding to sensed acceleration and rotational rate from ISA 14 (FIG. 1A). As illustrated in FIG. 1B, corrections and compensations module 20 receives the laser sensor data including data representing velocity (V1, V2, and V3), static air pressure (PS1, PS2, and PS3), and SAT (SAT1, SAT2, and SAT3) corresponding to each of the emitted beams of directional light. Inertial sensor data corresponding to sensed acceleration (A̅) and rotational rate (ω̅) is received by filtering module 24.

Corrections and compensations module 20 applies correction and compensation factors to the velocity, static air pressure, and SAT data corresponding to each of the directions of the emitted directional light to produce corrected velocity, static air pressure, and SAT data corresponding to each of the separate directions. Corrections and compensation factors applied by corrections and compensations module 20 are based on systematic deviations of the laser sensor data from true freestream conditions that are a function of aircraft configuration state (e.g., flaps position, slats position, landing gear position, mounting location or angle of LADS 12 on the aircraft, or other aircraft configuration states) and/or flight condition of the aircraft (e.g., Mach number, AOA, AOS, or other flight conditions). Deviations of the laser sensor data from true freestream conditions (i.e., freestream velocity, static air pressure, and SAT) can be determined from flight testing data and/or wind tunnel data that correlates true freestream conditions as measured by a reference system (e.g., a pneumatic air data system on a boom that extends a pneumatic air data probe away from the aircraft body into freestream conditions) with laser sensor data measured during the corresponding conditions. Corrections and compensations module 20 applies the correction and compensation factors to the received laser sensor data to produce the corrected velocity, static air pressure, and SAT data that is provided to air data module 22.

Air data module 22 generates the set of air data parameters including, e.g., static air pressure, SAT, AOA, AOS, TAS, CAS, Mach number, pressure altitude, or aircraft air data parameters derived therefrom based on the laser sensor data received from corrections and compensations module 20. For example, air data module 22 can determine static air pressure as the arithmetic mean, median, mode, or other central tendency of the corrected PS1, corrected PS2, and corrected PS3 received from corrections and compensations module 20. Similarly, air data module 22 can determine SAT as the arithmetic mean, median, mode, or other central tendency of the corrected SAT1, corrected SAT2, and corrected SAT3 received from corrections and compensations module 20.

In the example of FIG. 1B, air data module 22 determines aircraft TAS, aircraft AOA, and aircraft AOS based on the three-dimensional velocity vector of the aircraft defined by the combination of corrected V1, corrected V2, and corrected V3 and a known installation position and/or orientation of LADS 12 on the aircraft. For instance, air data module 22 can rotate and/or translate the three-dimensional velocity vector defined by corrected V1, corrected V2, and corrected V3 into an aircraft body reference frame having three mutually-orthogonal axes, a first of the three axes extending through the nose of the aircraft, a second of the three axes directed orthogonally to the first axis and generally through a right wing of the aircraft, and a third of the three axes directed orthogonally to the first axis and to the second axis and generally through the bottom of the aircraft toward the Earth when the aircraft is on-ground. Air data module 22 determines aircraft TAS, aircraft AOA (i.e., an angle between a reference line of the aircraft, such as a chord of a wing of the aircraft, and the vector representing the relative motion between the aircraft and the oncoming airflow), and aircraft AOS (i.e., an angle between the direction of travel of the aircraft and the aircraft centerline extending through the nose of the aircraft) based on components of the three-dimensional vector defined by corrected V1, corrected V2, and corrected V3 in the aircraft body reference frame.

Air data module 22 determines pressure-based and/or temperature-based air data parameters, such as pressure altitude, CAS, Mach number, or other air data parameters that are functionally related to static air pressure and/or SAT, based on the determined static air pressure (e.g., derived from the central tendency of corrected PS1, corrected PS2, and corrected PS3) and the determined SAT (e.g., derived from the central tendency of corrected SAT1, corrected SAT2, and corrected SAT3). Air data module 22 provides the set of determined air data parameters to filtering module 24.

Filtering module 24 blends the set of determined air data parameters provided by air data module 22 with the received inertial sensor data (e.g., A̅ and ω̅) to produce the set of aircraft air data parameters that are output to consuming systems 18 (FIG. 1A). For example, filtering module 24 can blend the received inertial sensor data with the determined set of air data parameters provided by air data module 22 using one or more complementary filters, Kalman filters, or other data blending operations. The resulting set of air data parameters are output to consuming systems 18 for use with operational control of the aircraft (e.g., controlled flight).

Blending of the air data parameters that are determined using laser sensor data can improve both accuracy and response time of the air data parameters that are output to consuming systems 18. Accordingly, air data system 10 implementing techniques described herein can improve both accuracy, response time, and reliability of air data parameter outputs that are used for operational control (e.g., controlled flight) of the aircraft.

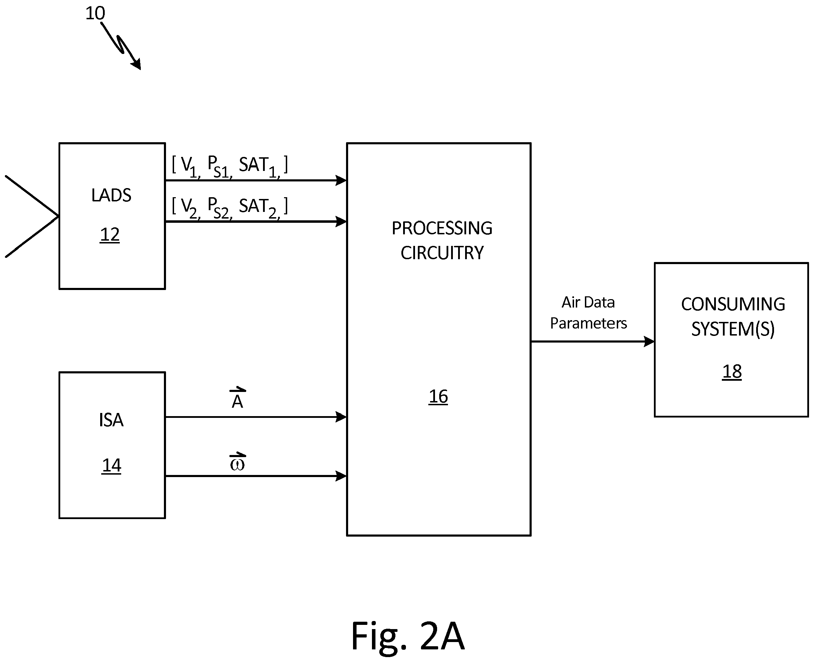

FIG. 2A is a schematic block diagram illustrating an example of aircraft air data system 10 showing LADS 12 emitting directional light in two separate directions. That is, the example of FIG. 2A can be substantially similar to the example of FIG. 1A, but showing LADS 12 emitting directional light in two separate directions rather than three separate directions (FIG. 1A). In the example of FIG. 2A, LADS 12 can be designed to emit the directional light in the two separate directions, such as via two laser emitters and/or a single emitter with optical components to direct the light in the two separate directions. In other examples, LADS 12 can be designed to emit the directional light in more than two separate directions (e.g., three separate directions), but may experience a failure mode that results in the directional light being emitted and/or received in only the two separate directions (e.g., a failure of one or more of the emitters, receivers, and/or optical components).

In the example of FIG. 2A, processing circuitry 16 receives laser sensor data from LADS 12 representative of velocity (V1 and V2), static air pressure (PS1 and PS2), and SAT (SAT1 and SAT2) corresponding to each of the two separate directions. Processing circuitry 16 further receives inertial sensor data representing acceleration (A̅) and rotational rate (ω̅) of the aircraft along each three independent axes.

Processing circuitry 16 determines the set of air data parameter outputs using the laser sensor data and the inertial sensor data. For example, processing circuitry 16 can generate aircraft static air pressure and/or SAT parameters based on the received laser sensor data corresponding to static air pressure (PS 1 and PS1) and SAT (SAT1 and SAT2), and can generate aircraft TAS, AOA, AOS, or parameters derived therefrom using the inertial sensor data received from ISA 14. In some examples, processing circuitry 16 can determine aircraft TAS and one of aircraft AOA or aircraft AOS using the received laser sensor data corresponding to velocity (V1 and V2), as is further described below. Accordingly, air data system 10 can generate a full complement of air data parameter outputs, including aircraft static air pressure, aircraft SAT, aircraft TAS, aircraft AOA, and aircraft AOS (and parameters derived therefrom) using a combination of laser sensor data sensed by LADS 12 and inertial sensor data sensed by ISA 14.

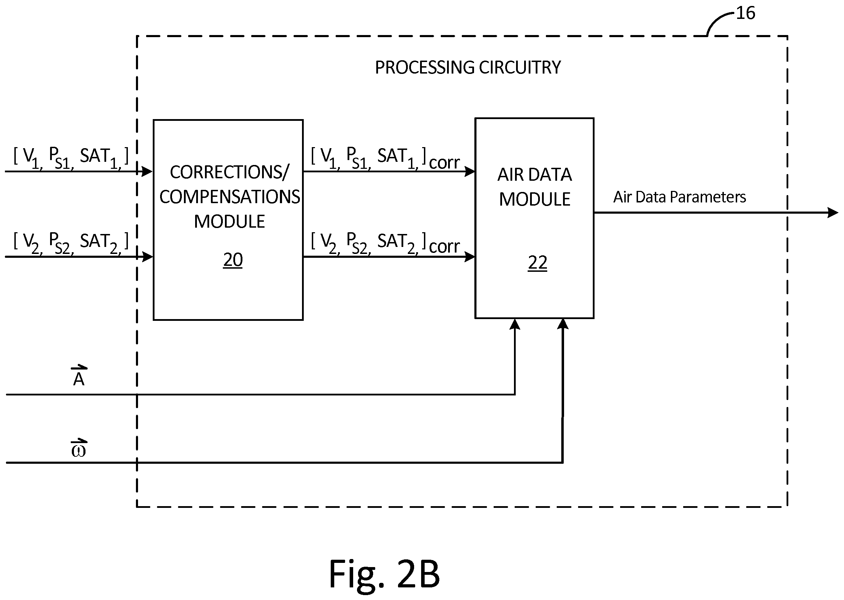

FIG. 2B is a schematic block diagram illustrating further details of processing circuitry 16 of air data system 10 to generate air data parameter outputs based on inertial sensor data and laser sensor data corresponding to two directions of emitted directional light. As illustrated in FIG. 2B, processing circuitry 16 receives laser sensor data corresponding to the two directions of emitted directional light from LADS 12 (FIG. 2A) and inertial sensor data corresponding to sensed acceleration and rotational rate from ISA 14 (FIG. 2A). Corrections and compensations module 20 receives the laser sensor data including data representing velocity (V1 and V2), static air pressure (PS1 and PS2), and SAT (SAT1 and SAT2) corresponding to each of the two emitted beams of directional light. Inertial sensor data corresponding to the sensed acceleration of the aircraft in three independent axes (A̅) and sensed rotational rate of the aircraft along three independent axes (ω̅) is received by air data module 22.

Corrections and compensations module 20 applies correction and compensation factors (e.g., based on systematic deviations of the laser sensor data from the true freestream conditions that are a function of aircraft configuration state and/or flight condition) to the velocity, static air pressure, and SAT data corresponding to each of the two directions of the emitted directional light to produce corrected velocity, static air pressure, and SAT data corresponding to each of the separate directions.

Air data module 22 determines aircraft static air pressure and SAT based on the corrected static air pressure and corrected SAT received from corrections and compensations module 20. For example, air data module 22 can determine aircraft static air pressure as the arithmetic mean, median, mode, or other central tendency of the corrected PS 1 and PS2. Air data module 22 can determine the aircraft SAT as the arithmetic mean, median, mode, or other central tendency of corrected SAT1 and SAT2.

In some examples, air data module 22 can determine aircraft TAS and/or one of aircraft AOA or aircraft AOS using the corrected velocities V1 and V2 received from corrections and compensations module 20. That is, velocities V1 and V2 define velocity information of the aircraft in a plane defined by the two separate directions of the emitted directional light. In examples where LADS 12 is configured to emit the directional light such that the plane of velocity information is parallel with a plane that vertically bisects the aircraft and extends through the nose of the aircraft, air data module 22 can utilize the corrected velocities V1 and V2 to determine aircraft AOA. In examples where LADS 12 is configured to emit the direction light such that the plane of the velocity information is orthogonal to the plane that vertically bisects the aircraft and extends through the nose of the aircraft, air data module 22 can utilize the corrected velocities V1 and V2 to determine aircraft AOS. In examples LADS 12 is configured to emit the directional light such that one of the velocities V1 or V2 corresponds to a direction that extends through the nose of the aircraft in a direction of forward flight of the aircraft, air data module 22 can utilize the corresponding corrected velocity V1 or V2 to determine aircraft TAS.

In some examples, air data module 22 utilizes inertial sensor data received from ISA 14 (i.e., A̅ and ω̅) to determine aircraft AOA, aircraft AOS, aircraft TAS, and/or parameters derived therefrom. For instance, air data module 22 can utilize the acceleration information and the rotational rate information to derive aircraft attitude (e.g., aircraft pitch angle, roll angle, and/or yaw angle) in the aircraft body reference frame. Air data module 22 can determine the aircraft AOA and AOS based on the derived aircraft attitude information. For example, air data module 22 can determine the aircraft AOA as the difference between the derived aircraft pitch angle and a reference angle of, e.g., a chord of the wing of the aircraft. Air data module 22 can determine the aircraft AOS as the difference between the derived aircraft yaw angle and a direction of a three-dimensional velocity vector of the aircraft (corresponding to the integrated three-dimensional acceleration vector A̅). Air data module 22 can determine aircraft TAS as the magnitude of the component of the three-dimensional velocity vector (corresponding to the integrated acceleration vector A̅) that extends through the nose of the aircraft.

Accordingly, processing circuitry 16 of air data system 10 can determine and output a full complement of air data parameters that are usable by consuming systems 18 for operational control of the aircraft (e.g., controlled flight of the aircraft). The full complement of air data parameters can include aircraft AOA, aircraft TAS, and aircraft AOS, as well as pressure and temperature-based outputs such as aircraft static air pressure, aircraft SAT, and parameters derived therefrom (e.g., pressure altitude, CAS, Mach, or other air data parameters).

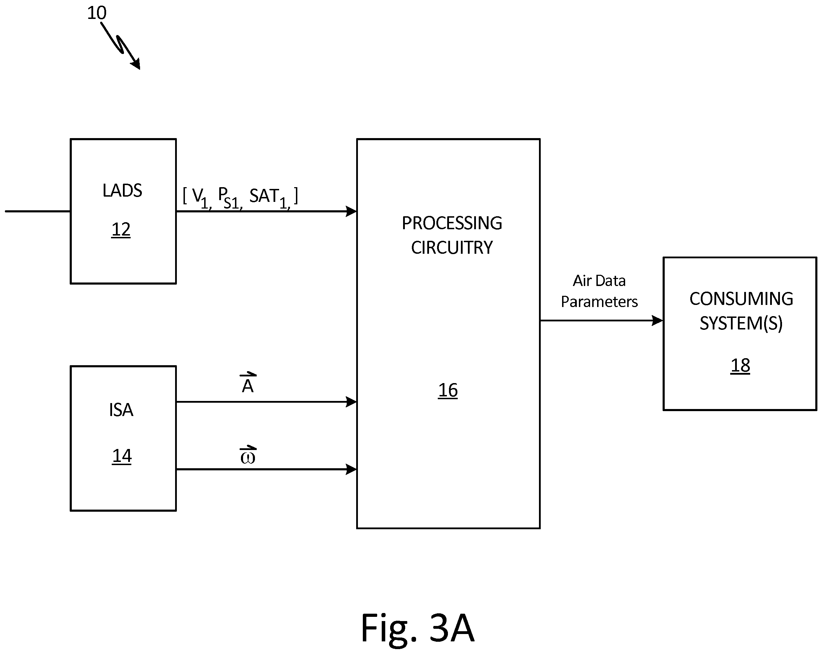

FIG. 3A is a schematic block diagram illustrating an example of aircraft air data system 10 showing LADS 12 emitting directional light in a single direction. That is, the example of FIG. 3A can be substantially similar to the examples of FIGS. 1A and 2A, but showing LADS 12 emitting directional light in a single direction rather than three separate directions (FIG. 1A) or two separate directions (FIG. 2A). In the example of FIG. 3A, LADS 12 can be designed to emit the directional light in the single direction, such as via a single laser emitter. In other examples, LADS 12 can be designed to emit the directional light in more than the single direction (e.g., two or more separate directions), but may experience a failure mode that results in the directional light being emitted and/or received in only the single direction (e.g., a failure mode in one or more emitters, receivers, and/or optical components).

In the example of FIG. 3A, processing circuitry 16 receives laser sensor data from LADS 12 representative of velocity (VI), static air pressure (PS1), and SAT (SAT1) corresponding to the direction of emitted directional light. Processing circuitry 16 further receives inertial sensor data representing acceleration (A̅) and rotational rate (ω̅) of the aircraft along each three independent axes.

Processing circuitry 16 determines the set of air data parameter outputs using the laser sensor data and the inertial sensor data. For example, processing circuitry 16 can generate aircraft static air pressure and/or SAT parameters based on the received laser sensor data corresponding to static air pressure (PS1) and SAT (SAT1), and can generate aircraft TAS, AOA, AOS, or parameters derived therefrom using the inertial sensor data received from ISA 14. In some examples, processing circuitry 16 can determine aircraft TAS using the received laser sensor data corresponding to velocity (VI), as is further described below. Accordingly, air data system 10 can generate a full complement of air data parameter outputs, including aircraft static air pressure, aircraft SAT, aircraft TAS, aircraft AOA, and aircraft AOS (and parameters derived therefrom) using a combination of laser sensor data sensed by LADS 12 and inertial sensor data sensed by ISA 14.

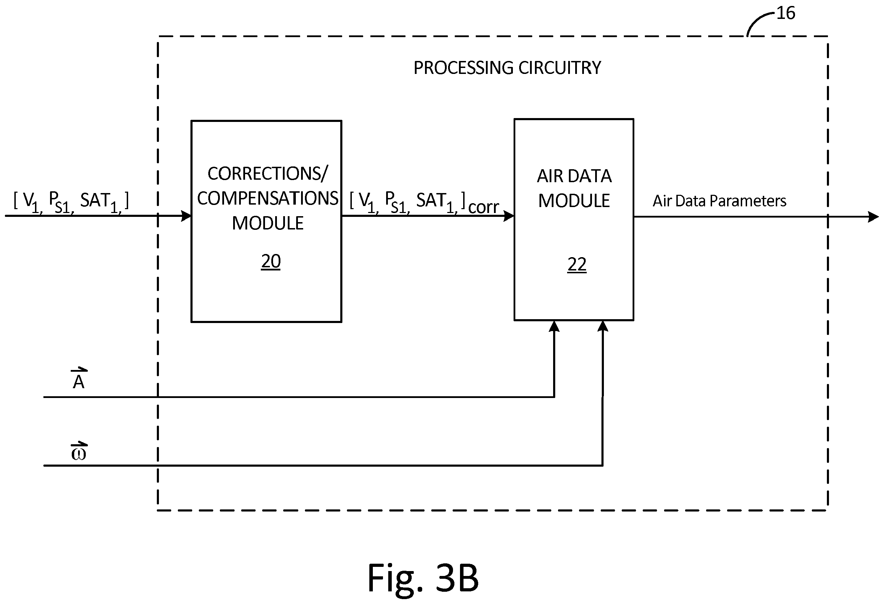

FIG. 3B is a schematic block diagram illustrating further details of processing circuitry 16 of air data system 10 to generate air data parameter outputs based on inertial sensor data and laser sensor data corresponding to a single direction of emitted directional light. As illustrated in FIG. 3B, processing circuitry 16 receives laser sensor data corresponding to the single direction of emitted directional light from LADS 12 (FIG. 3A) and inertial sensor data corresponding to sensed acceleration and rotational rate from ISA 14 (FIG. 3A). Corrections and compensations module 20 receives the laser sensor data including data representing velocity (VI), static air pressure (PS1), and SAT (SAT1) corresponding to the emitted beam of directional light. Inertial sensor data corresponding to the sensed acceleration of the aircraft in three independent axes (A̅) and sensed rotational rate of the aircraft along three independent axes (ω̅) is received by air data module 22.

Corrections and compensations module 20 applies correction and compensation factors (e.g., based on systematic deviations of the laser sensor data from the true freestream conditions that are a function of aircraft configuration state and/or flight condition) to the velocity, static air pressure, and SAT data corresponding to the single direction of the emitted directional light to produce corrected velocity, static air pressure, and SAT data corresponding to the emitted directional light.

Air data module 22 determines aircraft static air pressure and SAT based on the corrected static air pressure and corrected SAT received from corrections and compensations module 20. In some examples, air data module 22 can determine aircraft TAS using the corrected velocity (V1) received from corrections and compensations module 20, such as when LADS 12 is configured to emit the directional light in a direction that extends through the nose of the aircraft in a direction of forward flight of the aircraft. Air data module 22, in the example of FIG. 3B, utilizes inertial sensor data received from ISA 14 (i.e., A̅ and ω̅) to determine aircraft AOA, aircraft AOS, aircraft TAS, and/or parameters derived therefrom.

Accordingly, processing circuitry 16 of air data system 10 can determine and output a full complement of air data parameters that are usable by consuming systems 18 for operational control of the aircraft, the full complement of air data parameters including aircraft AOA, aircraft TAS, and aircraft AOS, as well as pressure and temperature-based outputs such as aircraft static air pressure, aircraft SAT, and parameters derived therefrom (e.g., pressure altitude, CAS, Mach, or other air data parameters). Techniques of this disclosure can therefore enable the generation of air data parameter outputs, including pressure-based, temperature-based and other air data parameters that are derived using dissimilar technologies, and which can provide such air data parameters to consuming systems (e.g., aircraft flight control systems, display systems, or other consuming systems) using combinations of the inertial sensor data and any one or more laser air data sensors.

### Discussion of Possible Embodiments

A system includes a laser air data sensor, an inertial sensor assembly, and processing circuitry. The laser air data sensor is configured to emit directional light in one or more directions into air about an exterior of an aircraft, and generate, based on returns of the emitted directional light, laser sensor data representing velocity of the aircraft in the one or more directions, static pressure of the air, and static air temperature of the air. The inertial sensor assembly is configured to sense acceleration and rotational rate of the aircraft and generate inertial sensor data representing acceleration and rotational rate in three axes. The processing circuitry generates a set of aircraft air data parameter outputs based on the laser sensor data and the inertial sensor data. The set of aircraft air data parameter outputs includes aircraft static air pressure, aircraft static air temperature, aircraft true airspeed, aircraft angle of attack, and aircraft angle of sideslip.

The system of the preceding paragraph can optionally include, additionally and/or alternatively, any one or more of the following features, configurations and/or additional components:
The laser air data sensor can be configured to generate the laser sensor data representing the velocity of the aircraft in the one or more directions, the static pressure of the air, and the static air temperature of the air based on Rayleigh scattering of the returns of the emitted directional light.

The laser air data sensor can be configured to: emit the directional light in three separate directions into the air about the exterior of the aircraft; and generate, based on returns of the directional light in each of the three separate directions, the laser sensor data representing the velocity of the aircraft in each of the three separate directions, the static pressure of the air in each of the three separate directions, and the static air temperature of the air in each of the three separate directions.

The processing circuitry can generate the set of aircraft air data parameter outputs based on the laser sensor data and the inertial sensor data by: determining first air data parameters corresponding to aircraft static air pressure, aircraft static air temperature, aircraft true airspeed, aircraft angle of attack, and aircraft angle of sideslip based on the laser sensor data; adjusting the first air data parameters using the inertial sensor data to generate a set of adjusted first air data parameters; and generating the set of aircraft air data parameters as the set of adjusted first air data parameters.

Adjusting the first air data parameters using the inertial sensor data can include blending the first air data parameters and the inertial sensor data to produce the set of adjusted first air data parameters.

Blending the first air data parameters and the inertial sensor data to produce the set of adjusted first air data parameters can include blending the first air data parameters and the inertial sensor data using a complementary filter.

The laser air data sensor can be configured to: emit the directional light in two separate directions into the air about the exterior of the aircraft; and generate, based on returns of the directional light in each of the two separate directions, the laser sensor data representing the velocity of the aircraft in each of the two separate directions, the static pressure of the air in each of the two separate directions, and the static air temperature of the air in each of the two separate directions.

The processing circuitry can generate the set of aircraft air data parameter outputs based on the laser sensor data and the inertial sensor data by: generating the aircraft static air pressure and the aircraft static air temperature based on the laser sensor data; and generating the aircraft true airspeed, the aircraft angle of attack, and the aircraft angle of sideslip using the inertial sensor data.

The laser air data sensor can be configured to: emit the directional light in a single direction into the air about the exterior of the aircraft; and generate, based on returns of the directional light in the single direction, the laser sensor data representing the velocity of the aircraft in the single direction, the static pressure of the air in the single direction, and the static air temperature of the air in the single direction.

The processing circuitry can generate the set of aircraft air data parameter outputs based on the laser sensor data and the inertial sensor data by: generating the aircraft static air pressure and the aircraft static air temperature based on the laser sensor data; and generating the aircraft true airspeed, the aircraft angle of attack, and the aircraft angle of sideslip using the inertial sensor data.

The inertial sensor assembly can include three accelerometers and three rate gyroscopes. Each of the accelerometers can be aligned to sense acceleration along one of the three axes. Each of the rate gyroscopes can be configured to sense rotational rate along one of the three axes.

The three axes can be mutually-orthogonal.

The processing circuitry can further output the set of aircraft air data parameter outputs to one or more consuming systems of the aircraft.

A method includes emitting directional light in one or more directions into air about an exterior of an aircraft, sensing returns of the emitted directional light in the one or more directions, and generating, based on the sensed returns, laser sensor data representing velocity of the aircraft in the one or more directions, static pressure of the air, and static air temperature of the air. The method further includes sensing inertial sensor data that includes acceleration and rotational rate of the aircraft in three axes, and generating a set of aircraft air data parameter outputs based on the laser sensor data and the inertial sensor data. The set of aircraft air data parameter outputs includes aircraft static air pressure, aircraft static air temperature, aircraft true airspeed, aircraft angle of attack, and aircraft angle of sideslip.

The method of the preceding paragraph can optionally include, additionally and/or alternatively, any one or more of the following features, configurations, operations, and/or additional components:

Generating the laser sensor data representing the velocity of the aircraft in the one or more directions, the static pressure of the air, and the static air temperature of the air can include generating the laser sensor data based on Rayleigh scattering of the sensed returns of the emitted directional light.

Emitting the directional light in the one or more directions can include emitting the directional light in three separate directions into the air about the exterior of the aircraft. Generating the laser sensor data representing velocity of the aircraft in the one or more directions, the static pressure of the air, and the static air temperature of the air can include generating, based on the sensed returns of the directional light in each of the three separate directions, the laser sensor data representing the velocity of the aircraft in each of the three separate directions, the static pressure of the air in each of the three separate directions, and the static air temperature of the air in each of the three separate directions.

Generating the set of aircraft air data parameter outputs based on the laser sensor data and the inertial sensor data can include: determining first air data parameters corresponding to aircraft static air pressure, aircraft static air temperature, aircraft true airspeed, aircraft angle of attack, and aircraft angle of sideslip based on the laser sensor data; adjusting the first air data parameters using the inertial sensor data to generate a set of adjusted first air data parameters; and generating the set of aircraft air data parameters as the set of adjusted first air data parameters.

Emitting the directional light in the one or more directions can include emitting the directional light in two separate directions into the air about the exterior of the aircraft. Generating the laser sensor data representing velocity of the aircraft in the one or more directions, the static pressure of the air, and the static air temperature of the air can include generating, based on the sensed returns of the directional light in each of the two separate directions, the laser sensor data representing the velocity of the aircraft in each of the two separate directions, the static pressure of the air in each of the two separate directions, and the static air temperature of the air in each of the two separate directions.

Generating the set of aircraft air data parameter outputs based on the laser sensor data and the inertial sensor data can include: generating the aircraft static air pressure and the aircraft static air temperature based on the laser sensor data; and generating the aircraft true airspeed, the aircraft angle of attack, and the aircraft angle of sideslip using the inertial sensor data.

Emitting the directional light in the one or more directions can include emitting the directional light in a single direction into the air about the exterior of the aircraft. Generating the laser sensor data representing velocity of the aircraft in the one or more directions, the static pressure of the air, and the static air temperature of the air can include generating, based on the sensed returns of the directional light in the single direction, the laser sensor data representing the velocity of the aircraft in the single direction, the static pressure of the air in the single direction, and the static air temperature of the air in the single direction. Generating the set of aircraft air data parameter outputs based on the laser sensor data and the inertial sensor data can include: generating the aircraft static air pressure and the aircraft static air temperature based on the laser sensor data; and generating the aircraft true airspeed, the aircraft angle of attack, and the aircraft angle of sideslip using the inertial sensor data.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system comprising:
a laser air data sensor configured to:
emit directional light in one or more directions into air about an exterior of an aircraft; and
generate, based on returns of the emitted directional light, laser sensor data representing velocity of the aircraft in the one or more directions, static pressure of the air, and static air temperature of the air;
an inertial sensor assembly configured to sense acceleration and rotational rate of the aircraft and generate inertial sensor data representing acceleration and rotational rate in three axes; and
processing circuitry that generates a set of aircraft air data parameter outputs based on the laser sensor data and the inertial sensor data, the set of aircraft air data parameter outputs including aircraft static air pressure, aircraft static air temperature, aircraft true airspeed, aircraft angle of attack, and aircraft angle of sideslip.

2. The system of claim 1,
wherein the laser air data sensor is configured to generate the laser sensor data representing the velocity of the aircraft in the one or more directions, the static pressure of the air, and the static air temperature of the air based on Rayleigh scattering of the returns of the emitted directional light.

3. The system of claim 1 or 2,
wherein the laser air data sensor is configured to:
emit the directional light in three separate directions into the air about the exterior of the aircraft; and
generate, based on returns of the directional light in each of the three separate directions, the laser sensor data representing the velocity of the aircraft in each of the three separate directions, the static pressure of the air in each of the three separate directions, and the static air temperature of the air in each of the three separate directions.

4. The system of claim 1, 2 or 3,
wherein the processing circuitry generates the set of aircraft air data parameter outputs based on the laser sensor data and the inertial sensor data by:
determining first air data parameters corresponding to aircraft static air pressure, aircraft static air temperature, aircraft true airspeed, aircraft angle of attack, and aircraft angle of sideslip based on the laser sensor data;
adjusting the first air data parameters using the inertial sensor data to generate a set of adjusted first air data parameters; and
defining the set of aircraft air data parameters as the set of adjusted first air data parameters.

5. The system of claim 4,
wherein the adjusting the first air data parameters using the inertial sensor data includes blending the first air data parameters and the inertial sensor data to produce the set of adjusted first air data parameters.

6. The system of claim 5,
wherein the blending the first air data parameters and the inertial sensor data to produce the set of adjusted first air data parameters comprises blending the first air data parameters and the inertial sensor data using a complementary filter.

7. The system of claim 1 or 2,
wherein the laser air data sensor is configured to:
emit the directional light in two separate directions into the air about the exterior of the aircraft; and
generate, based on returns of the directional light in each of the two separate directions, the laser sensor data representing the velocity of the aircraft in each of the two separate directions, the static pressure of the air in each of the two separate directions, and the static air temperature of the air in each of the two separate directions.

8. The system of claim 1 or 2,
wherein the laser air data sensor is configured to:
emit the directional light in a single direction into the air about the exterior of the aircraft; and
generate, based on returns of the directional light in the single direction, the laser sensor data representing the velocity of the aircraft in the single direction, the static pressure of the air in the single direction, and the static air temperature of the air in the single direction.

9. The system of claim 7 or 8,
wherein the processing circuitry generates the set of aircraft air data parameter outputs based on the laser sensor data and the inertial sensor data by:
generating the aircraft static air pressure and the aircraft static air temperature based on the laser sensor data; and
generating the aircraft true airspeed, the aircraft angle of attack, and the aircraft angle of sideslip using the inertial sensor data.

10. The system of any preceding claim,
wherein the inertial sensor assembly includes three accelerometers and three rate gyroscopes, each of the accelerometers aligned to sense acceleration along one of the three axes, and each of the rate gyroscopes configured sense rotational rate along one of the three axes, and / or
wherein, optionally, the three axes are mutually-orthogonal, and / or
wherein, optionally, the processing circuitry further outputs the set of aircraft air data parameter outputs to one or more consuming systems of the aircraft.

11. A method comprising:
emitting directional light in one or more directions into air about an exterior of an aircraft;
sensing returns of the emitted directional light in the one or more directions;
generating, based on the sensed returns, laser sensor data representing velocity of the aircraft in the one or more directions, static pressure of the air, and static air temperature of the air;
sensing inertial sensor data that includes acceleration and rotational rate of the aircraft in three axes; and
generating a set of aircraft air data parameter outputs based on the laser sensor data and the inertial sensor data, the set of aircraft air data parameter outputs including aircraft static air pressure, aircraft static air temperature, aircraft true airspeed, aircraft angle of attack, and aircraft angle of sideslip.

12. The method of claim 11,
wherein generating the laser sensor data representing the velocity of the aircraft in the one or more directions, the static pressure of the air, and the static air temperature of the air comprises generating the laser sensor data based on Rayleigh scattering of the sensed returns of the emitted directional light.

13. The method of claim 11 or 12,
wherein emitting the directional light in the one or more directions comprises emitting the directional light in three separate directions into the air about the exterior of the aircraft; and
wherein generating the laser sensor data representing velocity of the aircraft in the one or more directions, the static pressure of the air, and the static air temperature of the air comprises generating, based on the sensed returns of the directional light in each of the three separate directions, the laser sensor data representing the velocity of the aircraft in each of the three separate directions, the static pressure of the air in each of the three separate directions, and the static air temperature of the air in each of the three separate directions,
wherein, optionally, generating the set of aircraft air data parameter outputs based on the laser sensor data and the inertial sensor data comprises:
determining first air data parameters corresponding to aircraft static air pressure, aircraft static air temperature, aircraft true airspeed, aircraft angle of attack, and aircraft angle of sideslip based on the laser sensor data;
adjusting the first air data parameters using the inertial sensor data to generate a set of adjusted first air data parameters; and
generating the set of aircraft air data parameters as the set of adjusted first air data parameters.

14. The method of claim 11 or 12,
wherein emitting the directional light in the one or more directions comprises emitting the directional light in two separate directions into the air about the exterior of the aircraft; and
wherein generating the laser sensor data representing velocity of the aircraft in the one or more directions, the static pressure of the air, and the static air temperature of the air comprises generating, based on the sensed returns of the directional light in each of the two separate directions, the laser sensor data representing the velocity of the aircraft in each of the two separate directions, the static pressure of the air in each of the two separate directions, and the static air temperature of the air in each of the two separate directions,
wherein, optionally, generating the set of aircraft air data parameter outputs based on the laser sensor data and the inertial sensor data comprises:
generating the aircraft static air pressure and the aircraft static air temperature based on the laser sensor data; and
generating the aircraft true airspeed, the aircraft angle of attack, and the aircraft angle of sideslip using the inertial sensor data.

15. The method of claim 11 or 12,
wherein emitting the directional light in the one or more directions comprises emitting the directional light in a single direction into the air about the exterior of the aircraft;
wherein generating the laser sensor data representing velocity of the aircraft in the one or more directions, the static pressure of the air, and the static air temperature of the air comprises generating, based on the sensed returns of the directional light in the single direction, the laser sensor data representing the velocity of the aircraft in the single direction, the static pressure of the air in the single direction, and the static air temperature of the air in the single direction; and
wherein generating the set of aircraft air data parameter outputs based on the laser sensor data and the inertial sensor data comprises:
generating the aircraft static air pressure and the aircraft static air temperature based on the laser sensor data; and
generating the aircraft true airspeed, the aircraft angle of attack, and the aircraft angle of sideslip using the inertial sensor data.
